# EUROPEAN PATENT SPECIFICATION

(11) **EP 2 626 336 B1**
(45) Date of publication and mention of the grant of the patent: **11.07.2018**
(21) Application number: 12425076.2
(22) Date of filing: 26.04.2012
(51) Int. Cl.: C03C 27/04, F24S 20/20, F24S 70/00

(54) **A glass-to-metal joint for a solar receiver**
Glas-auf-Metall-Verbindung für einen Solarempfänger
Joint verre sur métal pour récepteur solaire

(30) Priority: 09.02.2012 EP 12425025
(43) Date of publication of application: 14.08.2013
(73) Proprietor: Archimede Solar Energy SRL, 06056 Massa Martana (PG) (IT)
(72) Inventor: Raggi, Claudio, 05100 Terni (IT); Chiarappa, Thomas, 06131 Perugia (IT)
(74) Representative: Marietti, Andrea

(56) References cited:
- WO-A2-2011/092546
- WO-A2-2011/132107
- GB-A- 2 103 350

## Description

The present invention relates to a glass-to-metal sealing device, to a method of producing a glass-to-metal sealing device and to a tubular solar receiver according to the preambles of claim 1, 11 and 12 respectively.

A key component of parabolic trough CSP (Concentrated Solar Power) is the Heat Collector Element (HCE) also known as solar receiver. One of the main issues that this element has to face and solve is the tightness to preserve a suitable designed vacuum pressure in order to reduce thermal losses to radiative phenomena only.
In a solar receiver, the most critical component undergoing possible vacuum losses is the connection between glass and metal, also known as Glass-to-Metal Seal (GMS).

Parabolic trough CSP solar plants are designed to produce energy by concentrating solar rays to a solar receiver, into which an Heat Transfer Fluid (HTF) flows through; the transfer fluid being heated up to high temperatures (up to 580-600 °C) and allowing, in a separate power block, the production of steam and therefore of electricity via a dedicated turbine.

For the thermodynamic cycle to properly work, the solar receiver has to maximally absorb the concentrated solar rays and minimally release the heat. A spectral selective coating covering the stainless steel tube is optimized in order to achieve high absorbance and low emissivity; furthermore, the thermal loss is minimized by encapsulating the tube into a vacuum environment by means of a co-axial cylindrical glass tube (having high optical transmittance).
Vacuum is mandatory to reduce thermal losses to radiative phenomena only.

A solar receiver will then necessarily contain two glass-to-metal transitions, also known as Glass to Metal Seals (GMS), which indeed represent the most critical component to possible vacuum losses.

The GMS solutions developed for solar receiving tubes in the CSP world have been driven both by technology requirements as well as by market and business needs.

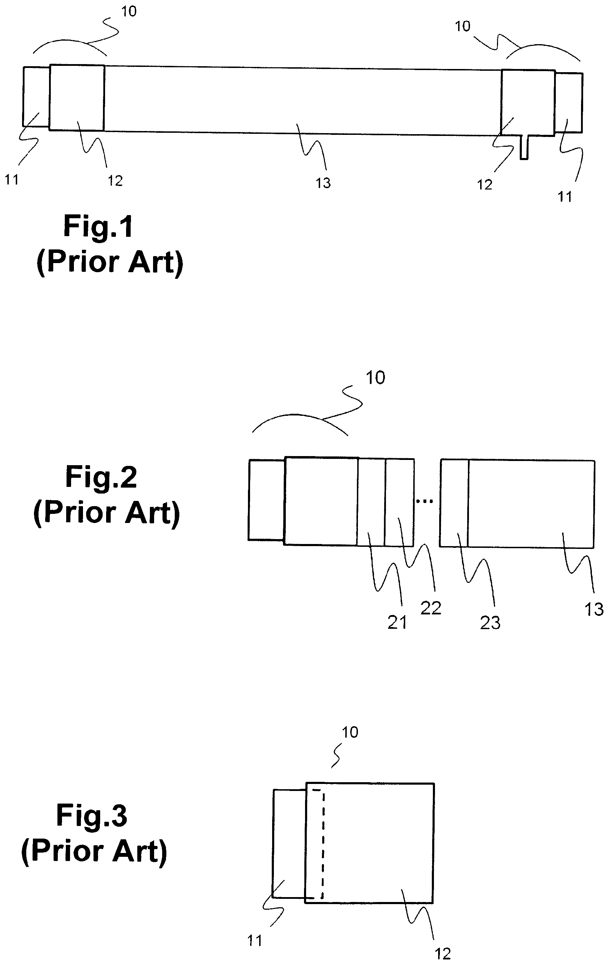

Figure 1 is schematically illustrating a solar receiver comprising an inner metal tube, not shown, and outer glass tube which are connected together via two glass-to-metal seals 10 and via two metallic bellows, not shown, welded to the inner metallic tube. Each glass-to-metal seal 10 comprises a metal collar 11, also known as metal cap or metal ring, and a glass cylinder 12 sealed together as schematically shown in Figure 3. The glass cylinder 12 is connected to the central glass portion 13 of the outer glass tube.

Several different types of glass-to-metal seals with various glasses and metals with different thermal expansion coefficients and sealing techniques are known in the art.

As used herein, the thermal expansion coefficient (TEC) of a material is defined as the ratio between the elongation, ΔL, and the proper length, L, of a material when it undergoes a temperature change ΔT.

According to the disclosure of two US patents by Mr. Houskeeper in 1919 (US 1 293 441 and US 1 294 466), it is known a technique for compensating for the drawbacks caused by the difference in the TEC coefficients of the glass and the metal, in which the hermetically sealing between glass and metal is improved by reducing the thickness of a portion of the metal element with a geometry as proposed by Mr. Houskeeper.

According to a known GMS technique, it has been developed a GMS joint between a stainless steel grade (aisi430) with a borosilicate glass of the family 3.3. Unfortunately, such GMS joint between Aisi430 steel and 3.3 borosilicate glass suffers for the drawback of having a very large difference between the values of the thermal expansion coefficients (TEC) of the metal and the glass, with a negative impact on the GMS under mechanical forces induced by thermal variations. In fact, the TEC values are: almost constant to 3.3 · 10⁻⁶ °C-1 for the glass and between [10,12] · 10⁻⁶ °C-1 for the metal in the temperature range of [50,450] °C.

According to another known GMS technique (US patent number 7,562,655), it has been developed a GMS joint between an austenitic alloy with well defined concentrations of Nickel and Cobalt (commonly known as Kovar-like alloy, DIN 17745 , ASTM F15) with a borosilicate glass of the family 5.1. Unfortunately, such GMS joint has the drawbacks that Kovar is a pretty costly alloy (oscillating with Nickel market price fluctuations) and that the 5.1 glass satisfying CSP dimensional specifications is still uncommon in the glass market.

According to other known techniques, transition glasses are adopted in GMS joints to limit the 5.1 glass to the sole GMS part (10), hence joining together a kovar-to-5.1 solution to a 3.3 glass as shown in Figure 2. Figure 2 is a drawing schematically illustrating a portion of the outer glass tube of the solar receiver comprising a matched GMS joint 10 with a different glass for the central glass portion 13 by employing a set of transition glasses having different TECs, as for instance, a 1st transition glass 21, a 2nd transition glass 22 and a n-th transition glass 23, positioned between the GMS joint 10 and the central portion 13 of the glass tube. Unfortunately, such GMS joints have the drawbacks that transition glasses are expensive and the manufacturing process is complex.

Another known sealing technology, as for instance laser welding, is comfortable but even more sensible to raw materials tolerances and dimensional specifications.

Document GB 2103350 discloses an example of glass/metal seal shape in a solar radiation collector. The solar radiation collector comprising a glass envelope around an absorber plate mounted on a metal tube communicating with a heat exchange condenser, wherein the glass envelope is sealed around the metal tube using an intermediate metal collar. The metal collar is sealed at one end around the metal tube and, at its other end, its thickness tapers to a knife edge and the glass is sealed to the inside of the knife edge.

Document WO 2011/ 132107 discloses a metal composition for a metal/borosilicate-glass seal in a tubular solar collector, wherein the metal is composed with the following alloy elements Ni, Co, Mn, Si, C, Ti, Zr, Ta in given weight percentage ranges and wherein the remaining part of the metal is made up of iron (Fe) apart from the inevitable impurities.

It is therefore the aim of the present invention to overcome the above mentioned drawbacks, in particular by providing a glass-to-metal sealing device, a method for producing a glass-to-metal sealing device and a tubular solar receiver different from a fully matched solution (as for instance the expensive and market uncommon kovar-to-5.1 glass) and from a transition glass solution (characterized by cheaper glass used only for the central glass portion 13) via a direct GMS joint between a [3.1,3.5] TEC borosilicate glass and an austenitic alloy having different thermal expansion coefficients.

The aforementioned aim is achieved by a glass-to-metal sealing device of a solar receiver, the device comprising a metal collar and a glass cylinder to be sealed together, the device further comprising the following features:
a) the glass cylinder is made out of a borosilicate glass having a thermal expansion coefficient in the range of [3.1,3.5] · 10⁻⁶ °C⁻¹ in the temperature range of [50,450]°C;
b) the metal collar is made of an austenitic alloy having a thermal expansion coefficient in the range of [3.5,6.0] · 10⁻⁶ °C⁻¹ in the temperature range of [50÷450] °C;
c) the end portion of the metal collar is beveled so as to increase its mechanical flexibility;
d) the end portion of the metal collar is processed via a thermal treatment in order to establish a bond between the metal and the glass surfaces.

The aforementioned aim is achieved also by a method of producing a glass-to-metal sealing device of a solar receiver, the device comprising a metal collar and a glass cylinder (12) to be sealed together, the method comprising the following steps:
a) providing, as glass for the glass cylinder, a borosilicate glass having a thermal expansion coefficient in the range of [3.1,3.5] · 10⁻⁶ °C⁻¹ in the temperature range of [50, 450]°C;
b) providing, as metal of the metal collar, an austenitic alloy having a thermal expansion coefficient in the range of [3.5,6.0] ·10⁻⁶ °C⁻¹ in the temperature range of [50÷450]°C;
c) beveling the end portion of the metal collar so as to increase its mechanical flexibility.
d) processing the end portion of the metal collar via a thermal treatment for establishing a bond between the metal and the glass surfaces;
e) sealing together the end collar portions of the glass cylinder and the metal collar.

The aforementioned aim is achieved also by a tubular solar receiver in which the outer glass tube is connected to the inner metal tube via the glass-to-metal sealing device according to the proposed invention.

Embodiments of the invention enable to retain the designed vacuum for the expected lifetime of the Heat Collector Element (HCE). Advantageously, the joint between the glass cylinder and the metal cap should be able to preserve a designed ultimate desired tightness, i.e. a pressure of p < 10⁻⁴ mbar, by fulfilling dedicated dimensional requirements so that the stability and durability of GMS joint is reliably ensured.

With embodiments of the invention, the glass component of the GMS joint undergoes mainly compressive stresses, reducing the dangerous tensile stresses to few MPa which is perfectly acceptable even by ordinary 3mm thick glass tubes.

With embodiments of the invention, the dimensional output leads to a GMS product perfectly consistent with the typical working conditions of a solar plant, hence suitable for CSP applications.

Embodiments of the invention enable to achieve a simplification in the manufacturing process, both from the cost point of view as well as from the final performances achievable for the target solar receiver product.

Embodiments of the invention lead to industrial benefits in the field of unmatched GMS products for the following reasons:
- commodity of raw material: the 3.3 borosilicate glass is a well know material and easy to find on the market;
- performances of the glass: the 3.3 borosilicate glass easily reaches a transmittance of 91.5 - 92.0%;
- cost of the raw material: the 3.3 borosilicate glass is cheaper than the 5.1 borosilicate glass;
- simplification of manufacturing process: the manufacturing process does not contain serious bottleneck steps so that manufacturing costs are reduced.

Hence, embodiments of the invention lead to sensible cost reductions for solar receivers, contributing to the decrease of the evaluated Levelized Cost Of Energy (LCOE) for solar energy in CSP parabolic trough plants.

### Brief Description of the Drawings

- Figure 1: a drawing schematically illustrating a solar receiver (Prior Art, previously described);
- Figure 2: a drawing schematically illustrating a portion of a solar receiver comprising a GMS device and a set of transition glasses (Prior Art, previously described);
- Figure 3: a drawing schematically illustrating a GMS joint (Prior Art);
- Figure 4: a drawing schematically illustrating a metal collar according to an example embodiment of the present invention;
- Figure 5: a drawing schematically illustrating a GMS device according to an example embodiment of the present invention.

### Description of Preferred Embodiments

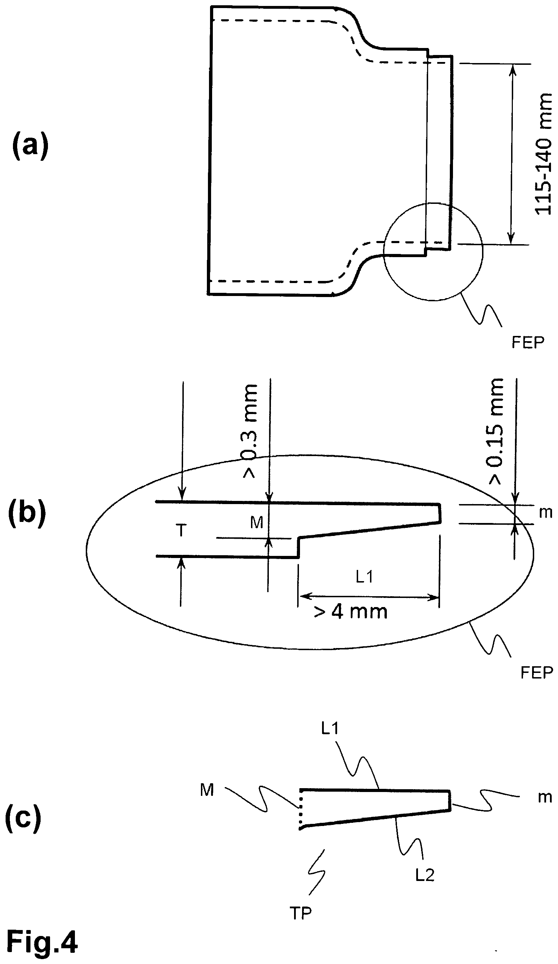

Figure 4 is a drawing schematically illustrating a metal collar according to an example embodiment of the present invention.
Figure 4(b) is a drawing schematically illustrating the end portion of the longitudinal section of the metal collar 11 circled in Figure 4a.

According to the proposed present invention, the proposed GMS joint 10 between the metal collar 11 and the glass cylinder 12 is an unmatched glass-to-metal sealing. In fact, the employed glass and metal materials behave differently under thermal gradients, especially when a physical connection between them, i.e. the sealing, has been established. The closer the corresponding TCE values, the softer the mechanical stress on the overlap region. Additionally, the heating up or cooling down velocity is surely different for glass and metal materials, independently whether matched or unmatched seals are considered.

The glass cylinder 12 is made out of a borosilicate glass having a thermal expansion coefficient in the range of [3.1,3.5] · 10⁻⁶ °C⁻¹ in the temperature range of [50,450]°C. In a preferred embodiment, for the CSP field, a 3.3 borosilicate glass is used. Advantageously, such glass type is easy to find in the market at commodity prices.
The metal collar 11 is made out of an austenitic alloy having a thermal expansion coefficient in the range of [3.5,6.0] ·10⁻⁶ °C⁻¹ in the temperature range of [50,450]°C. In a preferred embodiment of the invention, for the CSP field, such austenitic alloy has suitable concentration of Nickel and Cobalt contents, according to the DIN 17745 / ASTM F15 norms. In the field, the metals which fulfill such specifications are also known as Kovar-like alloys.

The end portion of the metal collar 11 is beveled so as to increase its mechanical flexibility. Advantageously, with such developed metal collar geometry, the tensions originated on the glass side of the GMS joint 10 are decreased through a compensation of the glass stiffness with respect to the metal mobility.
Thus, such metal collar geometry characterized by elastic properties mitigates the glass stresses which can be produced on the (stiff) glass component of the GMS joint by improving the mechanical elasticity of the metal.

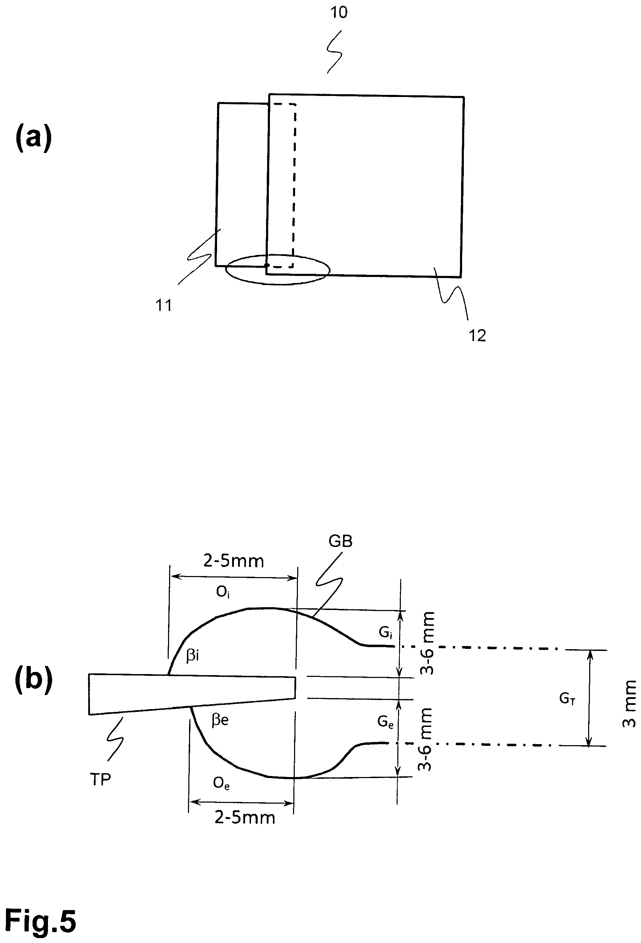

Drawings of preferred embodiment examples are schematically illustrated in Figure 4 and in Figure 5.

The illustrated dimensions of Figure 4 and Figure 5 have been obtained by studying the mechanical stresses involved in real working conditions of a typical solar CSP plant. Preferred used materials are a 3.3 borosilicate glass for the cylinder 12 and a Kovar-like alloy (DIN 17745 , ASTM F15) for the metal collar 11.

Figure 4(a) schematically illustrates a metal collar 11 according to an example embodiment of the present invention.

Figure 4(b) schematically illustrates a zoomed detail of the longitudinal section of the free end portion FEP of the metal collar 11 as circled in Figure 4(a). Such metal collar free end portion FEP will be then sealed to the glass cylinder as later described.
According to a preferred embodiment, as schematically shown in Figure 4(b), the beveling of the end portion of the metal collar 11 is performed so as to obtain longitudinal sections having a trapezoidal-like shape in which the minor base m is at the free end side of the metal collar. It is noted that, herein, with the term trapezoidal-like shape it is not intended only the trapezium shape itself but also similar shapes in which the sides are not totally straight or in which the two bases are parallel but more a bevel shape or a toothlike shape in which the end portion has a reduced thickness with respect to the beginning portion. In fact, the term trapezoidal-shape has been herein used mainly for explanatory purposes, i.e. for the sake of simplicity so as to describe the geometrical specifications in terms of bases and angles. In Figure 4(c) are illustrated the major base M, the minor base m, the two lateral sides L1, L2 of the trapezoidal-like shape of the collar end. The lateral side L1 is also representing the distance between the two bases m,M. The angle α, not shown, indicates the acute angle formed by the two lateral side L1, L2.

In invention embodiments, the following dimensions are recommended based on studies on real stress conditions of typical CSP plants:
- the ratio between the length of the minor base m and the length of the major base M being greater than 0.25; and/or,
- the length of the major base M in the range of [0.3, 0.6] mm and the length of the minor base m being in the range of [0.15, 0.6] mm; and/or,
- the lateral sides L1,L2 forming an angle α in the range of [0.5,10] degrees; and/or,
- the maximum thickness T of the metal collar being in the range of [0.3,1.2] mm.
For example, in a preferred embodiment, the length of the minor base m may be 0.3, the length of the major base M may be 0.4, the length of the lateral side L1 may be 7 mm and the angle α may be 0.82 degrees.

According to the proposed invention, the end portion of the metal collar 11 is processed via a thermal treatment for establishing a bond between the metal and the glass surface of the GMS joint. Advantageously, a dedicated structure on the metal surface suitable for a physical and chemical bond of the metal to the glass is achieved.
In fact, with such thermal treatment of the metal collar, a grid structure on the metal is conveniently created so that the glass material grips to the metal substrate (mechanical/physical join) and, simultaneously, a proper layer is suitably created on the metal surface in order for the glass to bond to it (chemical bond).

According to a preferred embodiment of the invention, the thermal treatment may preferably be an oxidation treatment to generate on the metal surface a glass-dedicated oxide layer.

Preferably, the glass-dedicated oxide layer thickness is tuned to be in the range of [0.3,3.0]pm, with a penetration in the metal matrix in the range of [1.5,18.0]µm.

Additionally, according to another preferred embodiment, it is recommended to develop an oxidation process characterized by a hydrogen content limited to few percents in concentration (up-to 5% in volume), in order to minimize the sticking of hydrogen-atoms in interstitial position within the crystalline structure (as hydrogen is one of the most difficult gas to be pumped away).

According to a preferred embodiment of the invention, the glass-dedicated oxide is an iron oxide. The iron oxide may preferably be either FeO or Fe₃O₄ or a mixture of FeO and Fe₃O₄.

A controlled thermal cycle process is advised in order to achieve the desired iron oxide as well as the optimum thickness and uniformity.

According to a preferred embodiment, the following thermal sealing process steps may be recommended for sealing the metal collar to the glass cylinder:
- a heating step, in which controls on temperature and on rotation are recommended;
- a melting step, in which controls on temperature, on rotation and on calibration of the molten glass edge are recommended;
- a joining step for inserting the beveled metal into the molten end portion of the glass cylinder, in which controls on temperature, on rotation, on burner relative positions and on mechanical produced forces (push/pull) on the will be final GMS joint are recommended;
- an in-line annealing step, in which careful control on temperature decrease to achieve a glass temperature below its characteristic softening temperature is recommended.

In order to avoid destructive effects due to small error propagations, the most critical thermal sealing sub-steps have been monitored and accordingly some parameters have been identified as requiring particular attention in controlling their absolute values and behaviors as, for example:
- heating up rates should preferably be maintained within [6,35]°C/sec,
- cooling down rates should preferably be maintained within [1.5,20]°C/sec,
- rotational speed should preferably be maintained within [12,100]rpm,
- burner should preferably be adjustable in a distance range of [-5.5,5.5]mm from the glass edge, depending on the considered process step, and at a translational speed within [0,15]mm/sec.

Figure 5(b) is a drawing schematically illustrating, according to an example embodiment, the circled detail of the GMS joint of Figure 5(a).
According to a preferred embodiment, the end portion of the glass cylinder 12 is melted via a dedicated thermal process so as to form, at the glass edge, an enlarged molten glass having a sphere-like shape, hereinafter denoted as molten glass ball GB. As shown in Figure 5(b) the glass edge has a maximum thickness of circa 12.6 mm (Gi+Ge+m) while the thickness G_{T} of the glass cylinder away from the glass ball GB is a regular glass thickness of circa 3 mm.

In preferred embodiments, the following dimensions for the GMS joints are advantageously recommended, where we denote by "internal" side and by "external" side the side looking towards the symmetry axis of the solar tubular receiver and the side looking towards the outer atmosphere, respectively:
- Axial (linear) extensions of the glass-to-metal overlap internal and external Oᵢ, Oₑ: in the range of [2,5.0] mm, and/or
- Glass thicknesses internal and external Gᵢ, Gₑ in the range of [3.0,6.0]mm; and/or,
- Moreover, it is also recommended to end up with a smooth, smaller than 90° contact angle βᵢ, βₑ, defined as the angles measured at the contact interfaces between glass and metal in Figure 5(b).

Since the previously described thermal sealing process involves very high temperatures on the metal collar and on the glass cylinder (exceeding the softening and the melting points), unavoidable tensions might get stacked at the interface between the two materials.
As these tensions could bring to GMS micro breakage, i.e. leaking of the GMS, during the further thermal cycles typical of successive solar receiver production steps as well as in real life working conditions, it is recommended, in a preferred embodiment, to implement an off-line annealing process whose goal is to get rid of possible glass residual stresses in the overlap region.
Hence, the above mentioned tensions can be advantageously smeared in their intensity over a wider region, decreasing therefore their potential dangerous impact. The cooling down rate value may conveniently be set in the range of [0.4,2.5] °C/min.

In embodiments of the invention, as part of a vacuum device, the glass cylinders 12 and the metal caps 11 may be properly cleaned, by developing a dedicated recipe in order to avoid undesired contaminants, however without applying strong chemical polishing which can cause unwanted nano-scratches on the glass surfaces. Under cleaning procedure should also be intended the ways the GMS joints are stored, aiming at avoiding contamination with humidity and greasy atmosphere during the storing procedure.

In addition to the embodiments of the present invention described above, the skilled persons in the art will be able to arrive at a variety of other arrangements and steps which, if not explicitly described in this document, nevertheless fall within the scope of the appended claims.

### List of used acronyms

- CSP: Concentrated Solar Power
- GMS: Glass-to-Metal Seal
- HCE: Heat Collector Element
- HTF: Heat Transfer Fluid
- LCOE: Levelized Cost Of Energy
- TEC: Thermal Expansion Coefficient

## Claims

1. A glass-to-metal sealing device (10) of a solar receiver, the device (10) comprising a metal collar (11) and a glass cylinder (12) to be sealed together, the device comprising the following features:
b) the metal collar (11) is made of an austenitic alloy having a thermal expansion coefficient in the range of [3.5,6.0] ·10⁻⁶ °C⁻¹ in the temperature range of [50÷450]°C;
c) the end portion of the metal collar (11) is beveled so as to increase its mechanical flexibility;
d) the end portion of the metal collar (11) is processed via a thermal treatment in order to establish a bond between the metal and the glass surfaces;
the device being **characterised in that** it further comprises the following feature :
a) the glass cylinder (12) is made out of a borosilicate glass having a thermal expansion coefficient in the range of [3.1,3.5] · 10-6 °C-1 in the temperature range of [50,450]°C.

2. The glass-to-metal sealing device of claim 1, wherein the beveling of the end portion of the metal collar (11) is performed so as to obtain longitudinal sections having a trapezoidal-like shape in which the minor base (m) is at the free end of the metal collar (11).

3. The glass-to-metal sealing device of claim 2, wherein the ratio between the length of the minor base (m) and the length of the major base (M) of the trapezoidal-like shape is greater than 0.25.

4. The glass-to-metal sealing device of claim 2 or 3, wherein the length of the major base (M) is in the range of [0.3, 0.6] mm and the length of the minor base (m) is in the range of [0.15, 0.3] mm.

5. The glass-to-metal sealing device according to any of the claims 2 to 4, wherein the lateral sides (L1,L2) of the trapezoidal-like shape form an angle in the range of [0.5,10] degrees.

6. The glass-to-metal sealing device according to any of the previous claims, wherein the austenitic alloy of item b. has suitable concentration of Nickel and Cobalt contents, according to the DIN 17745 / ASTM F15 norms.

7. The glass-to-metal sealing device according to any of the previous claims, wherein the thermal treatment of item d. is an oxidation treatment to generate on the metal surface a glass-dedicated oxide layer.

8. The glass-to-metal sealing device according to claim 7, wherein the glass-dedicated oxide layer has a thickness which spans in the range of [0.3,3.0] µm and a penetration in the metal matrix in the range of [1.5,18.0]µm.

9. The glass-to-metal sealing device according to claim 8 or 9, wherein the glass-dedicated oxide is an iron oxide.

10. The glass-to-metal sealing device according to claim 9, wherein the iron oxide is selected from the group consisting of: FeO, Fe₃O₄ or a mixture of FeO and Fe₃O₄.

11. A method of producing a glass-to-metal sealing device (10) of a solar receiver, the device (10) comprising a metal collar (11) and a glass cylinder (12) to be sealed together, the method comprising the following steps:
a) providing, as glass for the glass cylinder (12), a borosilicate glass having a thermal expansion coefficient in the range of [3.1,3.5] · 10⁻⁶ °C⁻¹ in the temperature range of [50,450]°C;
b) providing, as metal of the metal collar (11), an austenitic alloy having a thermal expansion coefficient in the range of [3.5,6.0] ·10⁻⁶ °C⁻¹ in the temperature range of [50÷450] °C;
c) beveling the end portion of the metal collar(11) so as to increase its mechanical flexibility.
d) processing the end portion of the metal collar (11) via a thermal treatment for establishing a bond between the metal and the glass surfaces;
e) sealing together the end collar portions of the glass cylinder and the metal collar.

12. A tubular solar receiver in which an outer glass tube is connected to an inner metal tube via the glass-to-metal sealing device according to any of the claims 1 to 10.

## Patentansprüche

1. Glas-an-Metall-Versiegelungsvorrichtung (10) eines Solarempfängers, wobei die Vorrichtung (10) einen Metallkragen (11) und einen Glaszylinder (12) aufweist, die miteinander versiegelt werden sollen, wobei die Vorrichtung die folgenden Merkmale aufweist:
b) der Metallkragen (11) besteht aus einer austenitischen Legierung mit einem Wärmeausdehnungskoeffizienten im Bereich von [3,5, 6,0] · 10⁻⁶ °C⁻¹ im Temperaturbereich von [50 ÷ 450] °C;
c) der Endabschnitt des Metallkragens (11) ist abgeschrägt, so dass seine mechanische Flexibilität erhöht ist;
d) der Endabschnitt des Metallkragens (11) ist durch eine thermische Behandlung bearbeitet, um eine Verbindung zwischen der Metall- und der Glasoberfläche herzustellen;
wobei die Vorrichtung **dadurch gekennzeichnet ist, dass** sie überdies das folgende Merkmal umfasst:
a) der Glaszylinder (12) besteht aus einem Borosilicatglas mit einem Wärmeausdehnungskoeffizienten im Bereich von [3,1, 3,5] · 10⁻⁶ °C⁻¹ im Temperaturbereich von [50, 450] °C.

2. Glas-an-Metall-Versiegelungsvorrichtung nach Anspruch 1, wobei das Abschrägen des Endabschnitts des Metallkragens (11) so ausgeführt ist, dass Längsabschnitte mit einer trapezähnlichen Form erhalten werden, in denen sich die Nebenbasis (m) am freien Ende des Metallkragens (11) befindet.

3. Glas-an-Metall-Versiegelungsvorrichtung nach Anspruch 2, wobei das Verhältnis zwischen der Länge der Nebenbasis (m) und der Länge der Hauptbasis (M) der trapezähnlichen Form größer als 0,25 ist.

4. Glas-an-Metall-Versiegelungsvorrichtung nach Anspruch 2 oder 3, wobei die Länge der Hauptbasis (M) im Bereich von [0,3, 0,6] mm liegt und die Länge der Nebenbasis (m) im Bereich von [0,15, 0,3] mm liegt.

5. Glas-an-Metall-Versiegelungsvorrichtung nach einem der Ansprüche 2 bis 4, wobei die lateralen Seiten (L1, L2) der trapezähnlichen Form einen Winkel im Bereich von [0,5, 10] Grad bilden.

6. Glas-an-Metall-Versiegelungsvorrichtung nach einem der vorhergehenden Ansprüche, wobei die austenitische Legierung von Element b. eine geeignete Konzentration von Nickel- und Kobaltgehalten gemäß den Normen DIN 17745 / ASTM F15 aufweist.

7. Glas-an-Metall-Versiegelungsvorrichtung nach einem der vorhergehenden Ansprüche, wobei die thermische Behandlung von Element d. eine Oxidationsbehandlung ist, um auf der Metalloberfläche eine für Glas bestimmte Oxidschicht zu erzeugen.

8. Glas-an-Metall-Versiegelungsvorrichtung nach Anspruch 7, wobei die für Glas bestimmte Oxidschicht eine Dicke aufweist, die sich im Bereich von [0,3, 3,0] µm erstreckt und eine Penetration in der Metallmatrix im Bereich von [1,5, 18,0] aufweist.

9. Glas-an-Metall-Versiegelungsvorrichtung nach Anspruch 8 oder 9, wobei das für Glas bestimmte Oxid ein Eisenoxid ist.

10. Glas-an-Metall-Versiegelungsvorrichtung nach Anspruch 9, wobei das Eisenoxid aus der Gruppe ausgewählt ist, bestehend aus: FeO, Fe₃O₄ oder einer Mischung aus FeO und Fe₃O₄.

11. Verfahren zum Herstellen einer Glas-an-Metall-Versiegelungsvorrichtung (10) eines Solarempfängers, wobei die Vorrichtung (10) einen Metallkragen (11) und einen Glaszylinder (12) umfasst, die miteinander versiegelt werden sollen, wobei das Verfahren die folgenden Schritte umfasst:
a) Bereitstellen, als Glas für den Glaszylinder (12), eines Borosilicatglases mit einem Wärmeausdehnungskoeffizienten im Bereich von [3,1, 3,5] · 10⁻⁶ °C⁻¹ im Temperaturbereich von [50, 450] °C;
b) Bereitstellen, als Metall des Metallkragens (11), einer austenitischen Legierung mit einem Wärmeausdehnungskoeffizienten im Bereich von [3,5, 6,0] · 10⁻⁶ °C⁻¹ im Temperaturbereich von [50 ÷ 450] °C;
c) Abschrägen des Endabschnitts des Metallkragens (11), so dass seine mechanische Flexibilität erhöht wird;
d) Bearbeiten des Endabschnitts des Metallkragens (11) über eine thermische Behandlung zum Herstellen einer Verbindung zwischen der Metall- und der Glasoberfläche;
e) Zusammenversiegeln der Endkragenabschnitte des Glaszylinders und des Metallkragens.

12. Rohrförmiger Solarempfänger, bei dem ein äußeres Glasrohr mit einem inneren Metallrohr über die Glas-an-Metall-Versiegelungsvorrichtung nach einem der Ansprüche 1 bis 10 verbunden ist.

## Revendications

1. Dispositif d'étanchéité verre sur métal (10) d'un récepteur solaire, le dispositif (10) comprenant un collier métallique (11) et un cylindre en verre (12) devant être assemblés de manière étanche, le dispositif comprenant les caractéristiques suivantes :
b) le collier métallique (11) est fait d'un alliage austénitique ayant un coefficient de dilatation thermique dans la plage de [3,5, 6,0].10⁻⁶ °C⁻¹ dans la plage de température de [50, 450] °C ;
c) la partie d'extrémité du collier métallique (11) est biseautée de façon à augmenter sa flexibilité mécanique ;
d) la partie d'extrémité du collier métallique (11) est traitée par un traitement thermique afin d'établir une liaison entre les surfaces de métal et de verre ;
le dispositif étant **caractérisé en ce qu'**il comprend en outre la caractéristique suivante :
a) le cylindre en verre (12) est constitué d'un verre borosilicaté ayant un coefficient de dilatation thermique dans la plage de [3,1, 3,5]·10⁻⁶ °C⁻¹ dans la plage de température de [50, 450] °C ;

2. Dispositif d'étanchéité verre sur métal selon la revendication 1, dans lequel le biseautage de la partie d'extrémité du collier métallique (11) est effectué de façon à obtenir des sections longitudinales ayant une forme de type trapézoïdale dans laquelle la petite base (m) est à l'extrémité libre du collier métallique (11).

3. Dispositif d'étanchéité verre sur métal selon la revendication 2, dans lequel le rapport entre la longueur de la petite base (m) et la longueur de la grande base (M) de la forme de type trapézoïdale est supérieur à 0,25.

4. Dispositif d'étanchéité verre sur métal selon la revendication 2 ou 3, dans lequel la longueur de la grande base (M) est dans la plage de [0,3, 0,6] mm et la longueur de la petite base (m) est dans la plage de [0,15, 0,3] mm.

5. Dispositif d'étanchéité verre sur métal selon l'une quelconque des revendications 2 à 4, dans lequel les côtés latéraux (L1, L2) de la forme de type trapézoïdale forment un angle dans la plage de [0,5, 10] degrés.

6. Dispositif d'étanchéité verre sur métal selon l'une quelconque des revendications précédentes, dans lequel l'alliage austénitique du point b. a une concentration appropriée de teneurs en nickel et en cobalt, selon les normes DIN 17745/ASTM F15.

7. Dispositif d'étanchéité verre sur métal selon l'une quelconque des revendications précédentes, dans lequel le traitement thermique du point d. est un traitement d'oxydation pour générer sur la surface métallique une couche d'oxyde dédiée au verre.

8. Dispositif d'étanchéité verre sur métal selon la revendication 7, dans lequel la couche d'oxyde dédiée au verre a une épaisseur qui s'étend dans la plage de [0,3, 3,0] µm et une pénétration dans la matrice métallique dans la plage de [1,5, 18,0] µm.

9. Dispositif d'étanchéité verre sur métal selon la revendication 8 ou 9, dans lequel l'oxyde dédié au verre est un oxyde de fer.

10. Dispositif d'étanchéité verre sur métal selon la revendication 9, dans lequel l'oxyde de fer est choisi dans le groupe constitué de : FeO, Fe₃O₄ ou un mélange de FeO et de Fe₃O₄.

11. Procédé de production d'un dispositif d'étanchéité verre sur métal (10) d'un récepteur solaire, le dispositif (10) comprenant un collier métallique (11) et un cylindre en verre (12) devant être assemblés de manière étanche, le procédé comprenant les étapes suivantes :
a) fourniture, en tant que verre pour le cylindre en verre (12), d'un verre borosilicaté ayant un coefficient de dilatation thermique dans la plage de [3,1, 3,5]·10⁻⁶ °C⁻¹ dans la plage de température de [50, 450] °C ;
b) fourniture, en tant que métal du collier métallique (11), d'un alliage austénitique ayant un coefficient de dilatation thermique dans la plage de [3,5, 6,0]·10⁻⁶ °C⁻¹ dans la plage de température de [50, 450] °C ;
c) biseautage de la partie d'extrémité du collier métallique (11) de façon à augmenter sa flexibilité mécanique.
d) traitement de la partie d'extrémité du collier métallique (11) par un traitement thermique pour établir une liaison entre les surfaces de métal et de verre ;
e) assemblage de manière étanche des parties de collier d'extrémité du cylindre en verre et du collier métallique.

12. Récepteur solaire tubulaire dans lequel un tube en verre externe est relié à un tube métallique interne par l'intermédiaire du dispositif d'étanchéité verre sur métal selon l'une quelconque des revendications 1 à 10.
